# EUROPÄISCHE PATENTSCHRIFT

(11) **EP 2 277 842 B1**
(45) Veröffentlichungstag und Bekanntmachung des Hinweises auf die Patenterteilung: **07.12.2011**
(21) Anmeldenummer: 09009413.7
(22) Anmeldetag: 21.07.2009
(51) Int. Cl.: C04B 35/04, C04B 35/443, B22D 41/22, B22D 41/28, B22D 41/32

(54) **Schieberplatte**
Slide gate
Plaque coulissant pour obturateur

(43) Veröffentlichungstag der Anmeldung: 26.01.2011
(73) Patentinhaber: Rath Aktiengesellschaft, 1010 Wien (AT)
(72) Erfinder: Zachmann, Lutz, 01662 Meißen (DE); Steffen, Philipp, 01662 Meißen (DE)
(74) Vertreter: Paul, Dieter-Alfred

(56) Entgegenhaltungen:
- EP-A2- 0 243 587
- DE-A1- 2 107 127
- DE-A1- 2 630 174
- GB-A- 1 383 232
- JP-A- 2000 203 931
- US-A- 5 250 479
- "MAGNESIA-SPINEL - A UNIVERSAL SLIDEGATE QUALITY?" STEEL TIMES INTERNATIONAL, DMG WORLD MEDIA, LEWES, GB, Bd. 20, Nr. 3, 1. Mai 1996 (1996-05-01), Seite 53, XP000596399 ISSN: 0143-7798

## Beschreibung

Die vorliegende Erfindung betrifft eine feuerfeste Schieberplatte, insbesondere für Schieber- oder Drehverschlüsse an metallurgischen Gefäßen, mit einem Grundkörper und einem in diesen eingesetzten feuerfesten keramischen Einsatz sowie ein Verfahren zur Herstellung einer solchen feuerfesten Schieberplatte.

Feuerfeste Platten werden bereits seit langem in Form von Schieberplatten oder Drehschlussplatten zur Ausflussregelung an metallurgischen Schmelzgefäßen eingesetzt. Aus der DE 27 19 105 C3 ist es bekannt, eine solche Schieberplatte in einen Grundkörper und einen oxidkeramischen Einsatz, der die Ausflussöffnung trägt, aufzuteilen. Der Grundkörper besteht aus einem feuerfesten Feuerbeton, wobei der oxidkeramische Einsatz an diesem Grundkörper befestigt ist. Hierzu kann der oxidkeramische Einsatz in einem gestuften oder konischen Sitz in den Grundkörper eingemörtelt werden. Bei derartigen Verbund-Schieberplatten können aufgrund der unterschiedlichen Wärmeausdehnungen der miteinander verbundenen Materialien Risse im Übergangsbereich zwischen dem oxidkeramischen Einsatz und dem Grundkörper auftreten. Ferner kann über die zwischen diesen beiden Bauteilen befindliche Mörtelfuge Sauerstoff verhältnismäßig leicht in den Durchflussbereich eindringen, was ebenfalls als nachteilig empfunden werden muss.

In der DE 33 07 193 wird ebenfalls eine Verbund-Schieberplatte mit einem Grundkörper und einem in diesen befindlichen oxidkeramischen Einsatz vorgestellt, bei der der Grundkörper aus einem ungebrannten Material besteht und durch einen chemischen Binder zusammengehalten wird. Um einen deratigen Grundkörper zu erhalten, werden die Einzelbestandteile des Grundkörpers miteinander gemischt, in Form gepresst und bei einer Temperatur zwischen 300 und 600°C ausgehärtet. Der getrennt von dem Grundkörper hergestellte keramische Einsatz wird in diesem Grundkörper über eine dort vorgesehene Stufung oder eine konische Sitzfläche gehalten. Auch bei einer derartigen Schieberplatte kann wegen der unterschiedlichen Wärmeausdehnungskoeffizienten des Grundkörpermaterials und des Einsatzes zwischen diesen Bauteilen verhältnismäßig leicht Sauerstoff in den Durchflussbereich eindringen. Außerdem erhöhen die verhältnismäßig hohen Temperbedingungen den Fertigungsaufwand.

Es besteht demnach nach wie vor der Bedarf an einer Schieberplatte, die die oben genannten technischen Nachteile nicht aufweist.

Die Aufgabe der vorliegenden Erfindung besteht somit darin, die bislang bekannten feuerfesten Schieberplatten für Schieber- oder Drehverschlüsse dahingehend zu verbessern, dass sie einerseits leicht herstellbar sind, dabei gleichzeitig den thermischen Wechselbeanspruchungen gut standhalten können und außerdem eine zuverlässige Abdichtung zwischen dem Grundkörper und dem in diesen eingesetzten keramischen Einsatz sicherstellen.

Erfindungsgemäß wird diese Aufgabe gelöst durch eine feuerfeste Schieberplatte, insbesondere für Schieber- oder Drehverschlüsse an metallurgischen Gefäßen, aus einem Grundkörper und einem feuerfesten keramischen Einsatz mit einer Durchflussöffnung, wobei der Grundkörper die folgenden Bestandteile enthält:
40 - 65 Gew.-% Magnesiumoxid mit einer Korngröße von 0,5 - 5 mm,
30 - 45 Gew.-% Magnesiumoxid mit einer Korngrößenverteilung, bei der 50 - 80 Gew.-% eine Korngröße von weniger als 0,063 mm aufweist,
1 - 5 Gew.-% Tonerdezement,
2 - 7 Gew.-% eines Phosphatbinders sowie
3 - 5 Gew.-% eines organischen Binders.

Im Rahmen der Arbeiten, die zu dieser Erfindung geführt haben, hat sich herausgestellt, dass ein Grundkörper dieser Zusammensetzung mit den unterschiedlichsten feuerfesten keramischen Einsätzen kombinierbar ist. Dies können Verschleißeinsätze aus Materialien sein, wie sie beispielsweise aus der DE 100 06 939 C1 bekannt sind. Bezüglich ihrer äußeren Form können diese Einsätze als Ringe ausgeführt sein. Eine Stufung oder Konizität der Einsätze ist nicht erforderlich. Diese Einsätze weisen in ihrem Innenbereich eine durchgehende Öffnung auf, durch die beim Einsatz als Schieberplatte das flüssige Metall hindurch fließen kann.

Bei den als Schieber- oder Drehverschlüssen verwendeten erfindungsgemäßen Schieberplatten haben die erfindungsgemäß verwendeten Einsätze jedoch bevorzugt keine kreisrunde Form sondern sind so geformt, dass sie den Grundkörper im gesamten Gleitbereich des Schieber- oder Drehverschlusses abdecken, sodass der Grundkörper in keiner Stellung des Schiebers mit dem geschmolzenen Metall in Kontakt kommt.

Trotz der unterschiedlichen thermischen Ausdehnungskoeffizienten der Materialien von Grundkörper und keramischem Einsatz erlaubt die besondere Zusammensetzung des Grundkörpers die Herstellung von Schieber- oder Drehverschlüssen, die eine hohe Temperaturwechselbeständigkeit und Verschleißfestigkeit aufweisen. Darüber hinaus zeichnen sich die erfindungsgemäßen Schieberplatten durch eine zuverlässige Abdichtung zwischen Grundkörper und dem keramischen Einsatz aus, wodurch ein Eindringen von Sauerstoff in diesen Zwischenbereich wirksam verhindert wird. Dieser Vorteil ist besonders stark ausgeprägt, wenn der Grundkörper mit dem keramischen Einsatz verpresst ist. Auf diese Weise wird eine besonders bevorzugte feuerfeste Schieberplatte erhalten, die zwischen dem Grundkörper und dem keramischen Einsatz keine Fuge aufweist.

Als erfindungsgemäß einsetzbarer Phosphatbinder kann beispielsweise Phosphorpentoxid P₂O₅ bzw. P₄O₁₀ verwendet werden. Als organischer Binder kommt ein organisches Stärkepräparat zum Einsatz wie beispielsweise Stärke, Stärkeether und dergleichen.

Gemäß einer Weiterbildung der feuerfesten Schieberplatte liegt das Magnesiumoxid des erfindungsgemäßen Grundkörpers in Form von Magnesiumoxid-Sinter und/oder Magnesiumoxid-Spinell vor. Dies gilt sowohl für das grobkörnigere Magnesiumoxid mit einer Korngröße von 0,5 bis 5 mm, als auch für das feinkörnigere Magnesiumoxid, welches beispielsweise in Form von Magnesiumoxid-Feinmehl mit der angegebenen Korngrößenverteilung eingesetzt werden kann.

Der für den Grundkörper eingesetzte Tonerdezement weist bevorzugt einen Gehalt an Aluminiumoxid von wenigstens 70 Gew.-% auf. Durch Einsatz eines solchen Tonerdezements wird die mechanische Stabilität wie auch die Temperaturwechselbeständigkeit des erfindungsgemäßen Grundkörpers weiter verbessert.

Gemäß einer bevorzugten Ausführungsform der feuerfesten Schieberplatte wird diese durch Verpressen der Bestandteile des Grundkörpers zusammen mit dem hitzbeständigen keramischen Einsatz und anschließender thermischer Nachbehandlung hergestellt. Bei dem formgebenden Pressvorgang kann eine Pressform verwendet werden, die die spätere äußere Form der feuerfesten Schieberplatte bestimmt, wobei beim Pressen ein Druck von 60 bis 140 bar zweckmäßig ist. Die thermische Nachbehandlung wird vorzugsweise bei einer Temperatur von 150 bis 300°C, bevorzugt bei etwa 200°C durchgeführt. Die feuerfeste Schieberplatte wird diesen Temperaturen typischerweise über einen Zeitraum von sechs Stunden oder mehr ausgesetzt. Bei der thermischen Nachbehandlung kann es zu einem teilweisen Carbonisieren des organischen Binders kommen, was zu einer Verbesserung der Gleiteigenschaften der Schieberplattenoberfläche führt. Bei Einsatz von Stärkepräparaten als organische Binder verhindert deren Carbonisierung außerdem die Hydratation der Magnesiumoxid-Komponenten des Grundkörpers, wodurch sich dieser nahezu unbegrenzt lagern lässt.

Ein weiterer Gegenstand der vorliegenden Erfindung betrifft einen Grundkörper für eine erfindungsgemäße feuerfeste Schieberplatte wobei der Grundkörper wie oben beschrieben ausgestaltet ist. Ein solcher Grundkörper ist besonders vorteilhaft, da dieser aufgrund seiner besonderen Zusammensetzung eine gute Temperaturwechselbeständigkeit besitzt, insbesondere widerstandsfähig gegen Rissbildung ist. Ferner ist er tolerant gegenüber unterschiedlicher Wärmeausdehnung in Bezug auf einen in diesen Grundkörper eingepressten keramischen Einsatz, wodurch Undichtigkeiten zwischen diesen beiden Bauteilen wirksam vermieden werden können.

Ein weiterer Gegenstand der vorliegenden Erfindung betrifft ein Verfahren zur Herstellung einer feuerfesten Schieberplatte gemäß der vorliegenden Erfindung, bei der die Mischung der Bestandteile des Grundkörpers zusammen mit dem feuerfesten keramischen Einsatz formgebend verpresst und anschließend einer thermischen Nachbehandlung unterzogen werden, die insbesondere bei einer Temperatur von 150°C bis 300°C, bevorzugt bei etwa 200°C für einen Zeitraum von etwa sechs Stunden oder mehr durchgeführt wird. Bei dem formgebenden Pressvorgang ist ein Druck von 60 bis 140 bar zweckmäßig.

Das Tempern der feuerfesten Schieberplatte aus den bereits miteinander verpressten Bauteilen, d.h. dem Grundkörper und dem keramischen Einsatz, führt zu einer sehr guten wechseltemperaturbeständigkeit und Dichtigkeit auch bei wechselnder Temperaturbeanspruchung. Aufgrund dieser Herstellungsmethode kann die Ausbildung einer Fuge zwischen dem Grundkörper und dem Einsatz verhindert werden, was die Dichtigkeit der Schieberplatte gegenüber eindringendem Sauerstoff erhelblich verbessert. Des weiteren können durch den erfindugsgemäßen Temperprozess der gesamten Schieberplatte aus Grundkörper mitsamt Einsatz mögliche mechanische Spannungen zwischen diesen Bauteilen bereits bei der Herstellung ausgeglichen werden.

Auch wenn die mit Hilfe dieses Verfahrens erhaltenen Schieberplatten nach dem Tempern bereits in der Regel den äußeren Spezifikationen gerecht werden, so kann die erfindungsgemäße Schieberplatte im Anschluss an deren Herstellung gewünschtenfalls noch einer weiteren mechanischen Nachbearbeitung unterworfen werden wie beispielsweise einem Schleif- oder Poliervorgang.

Hinsichtlich weiterer Ausgestaltungen und Vorteile der Erfindung wird auf die Unteransprüche sowie die nachfolgende Beschreibung von Ausführungsbeispielen unter Bezugnahme auf die beiliegende Zeichnung verwiesen. In der Zeichnung zeigt
Figur 1 eine erfindungsgemäße Schieberplatte in einer seitlichen Schnittansicht,
Figur 2 die Schieberplatte aus Figur 1 in Aufsicht,
Figur 3 eine alternative Ausführungsform einer erfindungsgemäßen Schieberplatte in einer seitlichen SchnittDarstellung und
Figur 4 die Schieberplatte aus Figur 3 in Aufsicht.

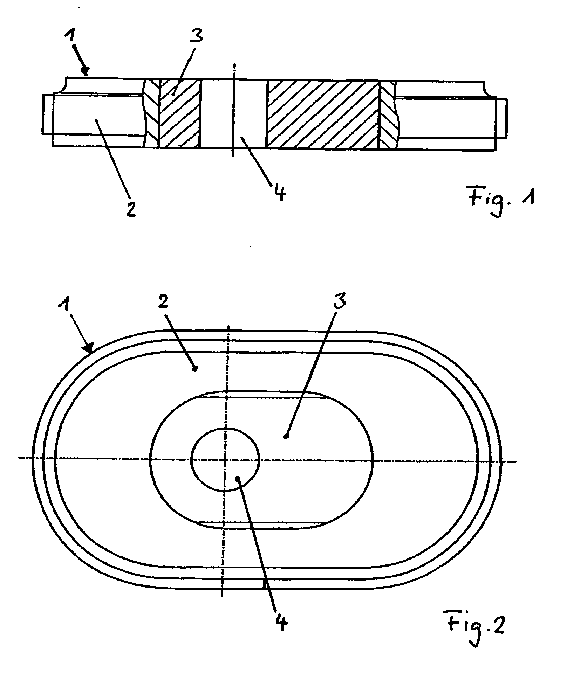

In der Figur 1 ist eine erfindungsgemäße Schieberplatte 1 mit einem Grundkörper 2 und einem feuerfesten keramischen Einsatz 3 dargestellt, der als Verschleißeinsatz ausgeführt ist. Der Einsatz 3 weist eine Durchflussöffnung 4 für den Durchfluss von geschmolzenem Metall auf.

Der Grundkörper 2 besitzt eine Rohdichte von 2,98 g/cm³, eine offene Porosität von 9% sowie eine Kaltdruckfestigkeit von 130 MPa. Der Grundkörper 2 weist als Bestandteile 89 Gew.-% MgO, 6 Gew.-% Al₂O₃, 0,1 Gew.-% SiO₂ sowie 2 Gew.-% C auf. Der feuerfeste keramische Einsatz 3 besitzt eine Rohdichte von 4,75 g/cm³, eine offene Porosität von 15% und setzt sich zusammen aus 95 Gew.-% ZrO₂, 2,5 Gew.-% MgO, 0 , 3 Gew.-% Al₂O₃ sowie 0 , 9 Gew.-% SiO₂.

Bei der Herstellung der erfindungsgemäßen Schieberplatte 1 wird der feuerfeste keramische Einsatz 2 mit einem Pressdruck von 60 bar in den Grundkörper 2 eingepresst und anschließend etwa 6 Stunden bei 200°C getempert.

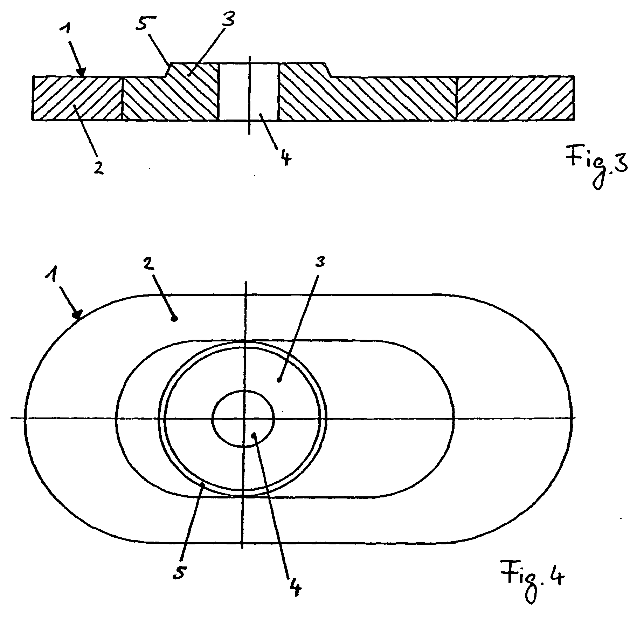

In Figur 3 ist eine alternative erfindungsgemäße Schieberplatte 1 dargestellt, die ebenfalls aus einem Grundkörper 2, einem feuerfesten keramischen Einsatz 3 mit einer Öffnung 4 besteht. Allerdings besitzt der Einsatz 3 um die Durchflussöffnung 4 eine konische Erhebung 5.

Die in Figur 3 dargestellte Schieberplatte besitzt eine Rohdichte von 2,98 g/cm³, eine offene Porosität von 9% und eine Kaltdruckfestigkeit von 130 MPa. Der Grundkörper 2 besteht aus 89 Gew.-% MgO, 6 Gew.-% Al₂O₃, 0,1 Gew.-% SiO₂ sowie.2% C. Der feuerfeste keramische Einsatz 3 besitzt eine Rohdichte von 3, 15 g/cm³, eine offene Porosität von < 6% und besteht aus 80 Gew.-% Al₂O₃, 10 Gew.-% SiO₂, 8 Gew.-% ZrO₂ sowie 6 Gew.-% C.

Die in Figur 3 dargestellte Schieberplatte wird durch verpressen des Grundkörpers 2 mit dem keramischen Einsatz 3 hergestellt, wobei ein Pressdruck von 110 bar angelegt wird. Die Schieberplatte wird anschließend etwa 6 Stunden bei 200°C getempert.

## Patentansprüche

1. Feuerfeste Schieberplatte (1), insbesondere für Schieber- oder Drehverschlüsse an metallurgischen Gefäßen, aus einem Grundkörper (2) und einem feuerfesten keramischen Einsatz (3) mit einer Durchflussöffnung (4), **dadurch gekennzeichnet, dass** der Grundkörper (2) die folgenden Bestandteile enthält:
40 - 65 Gew.-% Magnesiumoxid mit einer Korngröße von 0,5 - 5 mm,
30 - 45 Gew.-% Magnesiumoxid mit einer Korngrößenverteilung, bei der 50 - 80 Gew.-% eine Korngröße von weniger als 0,063 mm aufweist,
1 - 5 Gew.-% Tonerdezement,
2 - 7 Gew.-% eines Phosphatbinders sowie
3 - 5 Gew.-% eines organischen Binders.

2. Schieberplatte nach Anspruch 1, **dadurch gekennzeichnet, dass** das Magnesiumoxid als MgO-Sinter und/ oder MgO-Spinell vorliegt.

3. Schieberplatte nach Anspruch 1 oder 2, **dadurch gekennzeichnet, dass** der Tonerdezement einen Gehalt an Aluminiumoxid von wenigstens 70 Gew.-% aufweist.

4. Schieberplatte nach einem der vorstehenden Ansprüche, **dadurch gekennzeichnet, dass** die Schieberplatte (1) durch Verpressen der Bestandteile des Grundkörpers (2) zusammen mit dem hitzbeständigen keramischen Einsatz (3) und anschließender thermischer Nachbehandlung hergestellt wird.

5. Schieberplatte nach Anspruch 4, **dadurch gekennzeichnet, dass** die thermische Nachbehandlung bei einer Temperatur von 150 °C bis 300 °C für einen Zeitraum von 6 h oder mehr durchgeführt wird.

6. Schieberplatte nach einem der vorstehenden Ansprüche, **dadurch gekennzeichnet, dass** der feuerfeste keramische Einsatz (3) fugenfrei in den Grundkörper (2) eingepresst ist.

7. Grundkörper für eine feuerfeste Schieberplatte **dadurch gekennzeichnet, dass** der Grundkörper (2) gemäß einem der Ansprüche 1 bis 3 ausgestaltet ist.

8. Verfahren zur Herstellung einer feuerfesten Schieberplatte (1) nach einem der Ansprüche 1 bis 6, bei der die Mischung der Bestandteile des Grundkörpers (2) zusammen mit dem hitzbeständigen keramischen Einsatz (3) verpresst und anschließend einer thermischen Nachbehandlung unterzogen werden, die insbesondere bei einer Temperatur von 150 °C bis 300 °C für einen Zeitraum von 6 h oder mehr durchgeführt wird.

## Claims

1. A fire-resistant slider plate (1), in particular for slide or twist closures on metallurgic containers, comprising a base element (2) and a fire-resistant ceramic insert (3) with a flow through opening (4) , **characterised in that** the base element (2) includes the following components:
40 - 65 % by weight magnesium oxide with a grain size of 0.5 - 5 mm,
30 - 45 % by weight magnesium oxide with a grain size distribution, wherein 50 - 80 % by weight has a grain size of less than 0.063 mm,
1 - 5 % by weight alumina cement,
2 - 7 % by weight of a phosphate binding agent, and
3 - 5 % by weight of an organic binding agent.

2. The slider plate according to Claim 1, **characterised in that** the magnesium oxide is provided as sintered MgO and/or MgO spinel.

3. The slider plate according to Claim 1 or 2, **characterised in that** the alumina cement has an aluminium oxide content of at least 70 % by weight.

4. The slider plate according to any of the preceding claims, **characterised in that** the slider plate (1) is produced by compressing the components of the base element (2) together with the heat-resistant ceramic insert (3) and then implementing a thermal after-treatment.

5. The slider plate according to Claim 4, **characterised in that** the thermal after-treatment is implemented at a temperature of 150 °C to 300 °C for a period of 6 hrs or more.

6. The slider plate according to any of the preceding claims, **characterised in that** the fire-resistant insert (3) is pressed into the base element (2) without any gaps.

7. A base element for a fire-resistant slider plate, **characterised in that** the base element (2) is designed according to any of Claims 1 to 3.

8. A method for producing a fire-resistant slider plate (1) according to any of Claims 1 to 6, wherein the mixture of the components of the base element (2) are compressed together with the heat-resistant insert (3) and then subjected to a thermal after-treatment, which is implemented in particular at a temperature of 150 °C to 300 °C for a period of 6 hrs or more.

## Revendications

1. Plaque coulissante réfractaire (1) en particulier pour fermeture coulissante ou rotative sur des récipients métallurgiques, composée d'un corps principal (2) et d'une pièce rapportée (3) en céramique réfractaire avec une ouverture d'écoulement (4) **caractérisée en ce que** le corps principal (2) comprend les composants suivants:
40 - 65 % en poids d'oxyde de magnésium avec une grosseur de grain de 0,5 - 5 mm,
30 - 45 % en poids d'oxyde de magnésium avec une distribution de grosseur de grain, pour laquelle 5 - 80 % en poids présente une grosseur de grain inférieure à 0,063 mm.
1 - 5 % en poids de ciment d'alumine
2 - 7 % en poids d'un agent liant de phosphate et
3 - 5 % en poids d'une agent liant organique.

2. Plaque coulissante selon revendication 1, **caractérisée en ce que** l'oxyde de magnésium est disponible en tant qu'aggloméré de MgO et/ou spinelle de MgO.

3. Plaque coulissante selon revendication 1 ou 2, **caractérisée en ce que** le ciment d'alumine présente une teneur en oxyde d'aluminium d'au moins 70% en poids.

4. Plaque coulissante selon l'une des revendications précédentes, **caractérisée en ce que** la plaque coulissante (1) est fabriquée par la compression des composants du corps principal (2) avec la pièce rapportée (3) en céramique résistante à la chaleur et le traitement postérieur thermique final.

5. Plaque coulissante selon revendication 4, **caractérisée en ce que** le traitement postérieur thermique est réalisé à une température comprise entre 150°C et 300°C pendant une durée de 6 h ou plus.

6. Plaque coulissante selon l'une des revendications précédentes, **caractérisée en ce que** la pièce rapportée (3) en céramique réfractaire est enfoncée dans le corps principal (2) sans laisser d'espace.

7. Corps principal pour une plaque coulissante réfractaire, **caractérisé en ce que** le corps principal (2) est conçu selon l'une des revendications 1 à 3.

8. Procédé pour la fabrication d'une plaque coulissante (1) selon l'une des revendications 1 à 6, pendant laquelle le mélange des composants du corps principal (2) sont comprimés avec la pièce rapportée (3) en céramique réfractaire et finalement soumis à un traitement thermique postérieur qui est notamment effectué à une température comprise entre 150°C et 300°C pendant une durée de 6 h ou plus.
